(19) Europäisches Patentamt

European Patent Office

Office européen des brevets

(11) EP 0 907 508 B1

(12) FASCICULE DE BREVET EUROPEEN

(45) Date de publication et mention
de la délivrance du brevet:
**25.08.2004 Bulletin 2004/35**

(51) Int Cl.⁷: **B32B 27/08**

(21) Numéro de dépôt: **98902025.0**

(22) Date de dépôt: **06.01.1998**

(86) Numéro de dépôt international:
**PCT/FR1998/000008**

(87) Numéro de publication internationale:
**WO 1998/030389 (16.07.1998 Gazette 1998/28)**

(54) **FILM ANTISTATIQUE POUR L'EMBALLAGE DE MATIERES QUI DIFFUSENT DES PRODUITS VOLATILS**

ANTISTATISCHE FOLIE ZUR VERPACKUNG VON MATERIALIEN DIE FLÜCHTIGE PRODUKTEN DIFFUSIEREN

ANTISTATIC FILM FOR PACKAGING MATERIALS DIFFUSING VOLATILE PRODUCTS

(84) Etats contractants désignés:
**AT BE CH DE DK ES FI FR GB GR IE IT LI LU NL PT SE**

(30) Priorité: **06.01.1997 FR 9700052**

(43) Date de publication de la demande:
**14.04.1999 Bulletin 1999/15**

(73) Titulaire: **Atofina**
**92800 Puteaux (FR)**

(72) Inventeurs:
• **ALEX, Patrick**
**F-91470 Limours Pecqueuse (FR)**
• **BOUILLOUX, Alain**
**F-27300 Bernay (FR)**

(74) Mandataire: **Neel, Henry**
**Atofina**
**D.C.R.D./D.P.I.**
**4, Cours Michelet,**
**La Défense 10**
**92091 Paris La Défense Cedex (FR)**

(56) Documents cités:
**EP-A- 0 342 066      EP-A- 0 476 895**
**EP-A- 0 595 706      EP-A- 0 613 919**
**EP-A- 0 826 731      EP-A- 0 842 969**
**FR-A- 1 585 637      FR-A- 2 178 205**
**FR-A- 2 519 012**

• **DATABASE WPI Section Ch, Week 9336 Derwent Publications Ltd., London, GB; Class A17, AN 93-285511 XP002042303 & JP 05 202 239 A (TORAY IND INC) , 10 août 1993**

**Description**

La présente invention concerne un film d'emballage de matières qui diffusent des produits volatils. Elle est particulièrement utile pour les billes ou les granulés de polystyrène expansible qui contiennent un agent d'expansion inflammable tel que le pentane. Le film de l'invention présente de bonnes propriétés barrière vis-à-vis du pentane. De plus, il est antistatique ce qui assure qu'au cours de sa fabrication, il n'y aura pas d'accumulation d'électricité statique qui peut provoquer des arcs perforant le film le rendant impropre à son usage.

De même au cours de son utilisation comme contenant, des frottements des emballages ne peuvent pas provoquer des accumulations d'électricité statique et ensuite des arcs pouvant enflammer le pentane.

La présente invention concerne un film antistatique en polyamide ou en alliage de polyamide et de polyoléfine. Il est utile pour emballer les matières qui diffusent des produits volatils. L'antistatisme garantit qu'au cours de sa fabrication, il n'y aura pas d'arcs électriques provoqués par accumulation d'électricité statique par exemple par les frottements sur les rouleaux des machines de fabrication. Les arcs électriques peuvent engendrer des perforations du film nuisant à son étanchéité. Ils peuvent aussi gêner l'impression éventuelle du film. Les bonnes propriétés barrière du film permettent d'éviter la perte des produits volatils. Ces produits peuvent être par exemple des parfums dont on a imprégné des granulés d'une matière poreuse, ou de l'eau parce qu'il est nécessaire que certaines matières contiennent de l'humidité, ou parce qu'elles en contiennent naturellement et qu'il ne faut pas qu'elles se déshydratent. Généralement, les sacs de matières qui diffusent des produits volatils ininflammables sont formés par une soudure à chaud ou par haute fréquence et si le sac n'est pas antistatique, il peut y avoir des granulés de matière à l'emplacement de la soudure pour fermer le sac, ce qui rend la fermeture du sac non étanche. Quant aux emballages contenant des produits volatils facilement inflammables, on évite de les former par une soudure à chaud, on fait un noeud. Par contre, l'antistatisme de l'emballage évite des arcs électriques par accumulation d'électricité statique, ces arcs pouvant provoquer des incendies soit au cours du remplissage du sac soit au cours du transport et du stockage. On ne peut en effet prévenir une légère fuite à travers le film, un sac provoquerait donc un incendie.

L'invention concerne aussi les emballages comprenant ces films.

Le film de l'invention comprend au moins une couche intérieure (A) en polyamide ou en alliage de polyamide et de polyoléfine et de chaque côté une couche extérieure (B) antistatique en polyoléfines en polyamide ou en alliage de polyamide et de polyoléfine, dans laquelle est dispersé un additif antistatique, avec la condition que si la couche intérieure est en polyoléfine alors les couches extérieures sont en polyamide ou en alliage de polyamide et de polyoléfine. Avantageusement, le film selon cette deuxième forme de l'invention est constituée de 3 couches : B/A/B. Un liant de coextrusion peut être disposé entre les couches (A) et (B) ou bien les couches (B) ou la couche (A) peuvent contenir des produits améliorant l'adhérence des couches (A) et (B).

L'art antérieur a déjà décrit des films en alliage de polyamide et de polyoléfine, en particulier EP 506 515 décrit de tels films pour protéger des polyesters avant leur réticulation dans le procédé SMC (Sheet moulding compound) ces films sont étanches au styrène libre présent dans les polyesters à réticuler puis après mise en forme du polyester on pèle ce film pour récupérer la pièce en polyester. Ces films ne sont pas antistatiques.

US 4 612 221 décrit des films constitués d'une couche de polyamide entre deux couches de polypropylène contenant un agent collant. Ces films servent à protéger de la nourriture et doivent résister au four à micro-ondes.

US 4 819 374 décrit des films constitués d'une couche de polyamide et d'une couche de polyoléfine, ils sont utiles pour couvrir les sols dans lesquels on injecte des fumigants pour les maintenir dans le sol.

Tous ces films ne sont pas antistatiques.

L'art antérieur n'a donc pas décrit le problème technique de la présente invention.

L'invention va maintenant être décrite en détails.

S'agissant de la première forme de l'invention. On entend par polyamide les produits de condensation :

- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylénediamine, la métaxylyènediamine, le bis-p aminocyclohexylméthane et la triméthylhexaméthylène diamine avec des diacides tels que les acides isophtalique, téréphtalique, adipique, azéiaïque, subérique, sébacique et dodécanedicarboxylique ;

  ou des mélanges de plusieurs de ces monomères ce qui conduit à des copolyamides.

On peut utiliser des mélanges de polyamide. On utilise avantageusement le PA-6 , le PA-6,6 et le PA 12.

Quant aux alliages de polyamide et de polyoléfine, ils sont constitués d'au moins un polyamide parmi ceux qu'on vient de citer et d'au moins une polyoléfine.

On entend par polyoléfines des polymères comprenant des motifs oléfines tels que par exemple des motifs éthylène, propylène, butène-1, etc...

A titre d'exemple, on peut citer :

- le polyéthylène, le polypropylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides (iv) les époxydes insaturés.
  Les copolymères blocs styrène/butadiène/styrène (SBS), les copolymères blocs styrène/isoprène/styrène (SIS).
  Ces copolymères de l'éthylène pouvant être greffés par des anhydrides d'acides dicarboxyliques insaturés ou des époxydes insaturés.
- les copolymères blocs styrène / éthyléne-buténe / styrène (SEBS). Les copolymères blocs pouvant être éventuellement maléisés.

On peut utiliser des mélanges de deux ou plusieurs de ces polyoléfines.
On utilise avantageusement :

- le polyéthylène,
- les copolymères de l'éthylène et d'une alpha-oléfine,
- les copolymères de l'éthylène / d'un (méth)acrytate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé,
- le polypropylène.

Avantageusement, les alliages de polyamide et de polyoléfine sont à matrice polyamide.
Il est recommandé, pour faciliter la formation de la matrice de polyamide, et si les polyoléfines ont peu ou pas de fonctions pouvant faciliter la compatibifisation, d'ajouter un agent compatibilisant.
L'agent compatibilisant est un produit connu en soi pour compatibiliser les polyamides et les polyoléfines.
On peut citer par exemple :

- le polyéthylène, le polypropylène, les copolymères éthylène propylène, les copolymères éthylène-butène, tous ces produits étant greffés par de l'anhydride maléique ou du méthacrylate de glycidyle.
- les copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé.
- les deux copolymères précédents dans lesquels l'anhydride maléique est remplacé par le méthacrylate de glycidyle,
- les copolymères éthylène / acide (méth)acrylique éventuellement leurs sels,
- le polyéthylène, le propylène ou les copolymères éthylène propylène, ces polymères étant greffés par un produit présentant un site réactif avec les amines ; ces copolymères greffés étant ensuite condensés avec des polyamides ou des oligomères polyamides ayant une seule extrémité amine.

Ces produits sont décrits dans les brevets FR 2 291 225 et EP 342 066 dont le contenu est incorporé dans la présente demande.
La quantité de polyamide formant la matrice peut être comprise entre 55 et 95 parties pour 5 à 45 parties de polyoléfines.
La quantité de compatibilisant est la quantité suffisante pour que la polyoléfine se disperse sous forme de nodules dans la matrice polyamide. Elle peut représenter jusqu'à 20 % du poids de la polyoléfine. On fabrique ces polymères par mélange de polyamide, de polyoléfine et éventuellement de compatibilisant selon les techniques usuelles de mélange à l'état fondu (bi vis, Buss, monovis).
Avantageusement, l'alliage de polyamide et de polyoléfine comprend une matrice de polyamide 6 (PA-6) ou 66 (PA-6,6) dans laquelle sont dispersés, soit des nodules d'un mélange de polyéthylène basse densité et de copolymère d'éthylène de (méth)acrylate d'alkyl et d'anhydride maléique ou de méthacrylate de glycidyle, soit des nodules de polypropylène.

De tels produits sont décrits dans les brevets US 5 070 145 et EP 564 338.

Dans le cas du polypropylène, on ajoute un comptabilisant qui est avantageusement un copolymère éthylène / propylène majoritaire en nombre de motifs propylène, greffé par l'anhydride maléique, puis condensé ensuite avec des oligomères mono aminés de caprolactame.

De tels mélanges de polyamide et de polyoléfine sont décrits dans le brevet US 5 342 886.

De préférence, la quantité de polyamide est comprise entre 50 et 75 parties pour 100 parties de l'alliage de polyamide et de polyoléfine.

A titre d'exemple, on peut utiliser les mélanges suivants (en % poids) :

1)

- 55 à 70 % dePA-6.
- 5 à 15 % d'un copolymère éthylène propylène majoritaire en polypropylène greffé par de l'anhydride maléique puis condensé ensuite avec des oligomères monoaminés de caprolactame.
- le complément à 100 % en polypropylène.

2)

- 55 à 70 % de PA-6.
- 5 à 15 % d'au moins un copolymère de l'éthylène avec (i) un (méth)acrylate d'alkyle ou un ester vinylique d'acide carboxylique insaturé et (ii) un anhydride d'acide carboxylique insaturé ou un époxyde insaturé greffé ou copolymérisé.
- le complément en polyéthylène.

3)

- 55 à 70 % de PA-6.
- 5 à 15 % de polyéthylène ou copolymères de l'éthylène et d'une alphaoléfine greffé par de l'anhydride maléique ou du méthacrylate de glycidyle.
- le complément en polyéthylène.

Ces polyamides ou alliages de polyamide et de polyoléfines contiennent des additifs pour les rendre antistatique. Il est recommandé d'utiliser des additifs qui ne migrent pas au cours de l'utilisation avec le temps ou même qui ne migrent pas ou n'exsudent pas pendant la transformation en film du polyamide ou de l'alliage de polyamide et de polyoléfine. En effet, il y aurait une perte de l'effet antistatique.

On peut citer par exemple le noir de carbone. La quantité peut être de 5 à 15 parties pour 100 parties de polyamide ou d'alliage. On peut encore citer les polymères contenant des blocs polyéthers dérivés du polyéthylène glycol ou contenant une majorité de motifs provenant de l'oxyde d'éthylène. Ce sont par exemple les copolymères de l'éthylène et du (méth)acrylate de polyéthylène glycol, les copolymères de l'éthylène et du (méth)acrylate de polyétherdiol contenant des motifs dérivés de l'oxyde d'éthylène et des motifs dérivés de l'oxyde de propylène, les polyétheruréthanes à blocs PEG et les polymères à blocs polyamide et blocs polyéther dont les blocs polyéther contiennent au moins 50 % en poids de polyéthylène glycol, c'est-à-dire de motifs venant de l'oxyde d'éthylène.

Les polymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha-oméga aminocarboxyliques de lactames ou de diacides carboxyliques et diamines en présence d'un diacide carboxylique limiteur de chaîne. Avantageusement, les blocs polyamides sont en polyamide-12 ou en polyamide-6.

La masse molaire en nombre $\overline{Mn}$ des séquences polyamides est comprise entre 300 et 15 000 et de préférence entre 600 et 5 000. La masse $\overline{Mn}$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 250° C pour une concentration initiale de 0,8 g/100 ml.

Que les blocs polyéthers dérivent du polyéthylène glycol, du polyoxypropylène glycol ou du polyoxytetraméthylène glycol, ils sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

Que les blocs polyéther soient dans la chaîne du polymère à blocs polyamides et blocs polyéther sous forme de diols ou de diamines, on les appelle par simplification blocs PEG ou blocs PPG ou encore blocs PTMG.

On ne sortirait pas du cadre de l'invention si les blocs polyéther contenaient plusieurs motifs différents tels que des motifs dérivés de l'éthylène glycol, du propylène glycol ou encore du tétraméthylène glycol. Avantageusement, les blocs polyéther contiennent au moins 50 % en poids de motifs venant de l'oxyde d'éthylène.

De préférence, le polymère à blocs polyamides et blocs polyéther comprend un seul type de bloc polyamide et un seul type de blocs polyéther. On utilise avantageusement des polymères à blocs PA-12 et blocs PEG et des polymères à blocs PA-6 et blocs PEG.

Avantageusement, le polymère à blocs polyamides et blocs polyéthers est tel que le polyamide est le constituant majoritaire en poids, c'est-à-dire que la quantité de polyamide qui est sous forme de blocs et celle qui est éventuellement répartie de façon statistique dans la chaîne représente 50 % en poids ou plus du polymère à blocs polyamide et blocs polyéther. Avantageusement, la quantité de polyamide et la quantité de polyéther sont dans le rapport (polyamide/polyéther) 1/1 à 3/1 et de préférence : 1/1.

l'avantage des copolymères contenant du (méth)acrylate d'un polyétherdiol et des polymères à blocs polyamides et blocs polyéther est qu'ils ne migrent pas. Le film de l'invention a donc des propriétés antistatiques permanentes. Les proportions de ces polymères et du polyamide ou de l'alliage de polyamide et de polyoléfine est fonction de la quantité de blocs polyéthylène glycol contenus dans ces polymères, plus il y en a plus le film est antistatique.

Avantageusement, la quantité de ces polymères est de 10 à 40 parties pour respectivement 90 à 60 parties de polyamide ou d'alliage de polyamide et de polyoléfine. L'invention concerne aussi dans cette première forme des films d'un mélange :

$\underline{a}$ de polyamide

$\underline{b}$ de copolymére à blocs polyamides et blocs polyéther

$\underline{c}$ éventuellement d'un polyoléfine non fonctionnalisée

$\underline{d}$ d'une polyoléfine fonctionnalisée

(a) et (b) ont été définis plus haut. (d) est choisi parmi les polyoléfines citées plus haut pour les alliages de polyamide et de polyoléfine et qui contiennent des fonctions acide carboxyiique, anhydride d'acide carboxylique ou epoxyde insaturé, ces fonctions étant apportées par greffage ou par copolymérisation de monomères correspondants par exemple avec l'éthylène ou les oléfines.

Les divers constituants étant présents en des quantités pondérales a, b, c et d telles que :

a > 0 ; b > 0 ; c + d > 0 a + b + c + d = 100 avec
a/b > 0,2 ; (a + b) / (c + d) > 1 et b / (a+b+c+d) < 0,5

selon un mode avantageux 0,2 < a/b < 5

Selon un autre mode avantageux 0,25 < b/(a+b+c+d) < 0,4

Avantageusement le polyamide des blocs de b est du même type que le polyamide a.

L'épaisseur de ces films peut varier de 50 à 500 µm. L'étanchéité est suffisante avec des épaisseurs de 50 à 100 µm mais selon les dimensions de l'emballage les contraintes mécaniques peuvent conduire à des épaisseurs importantes jusqu'à 500 µm ou même au-delà. La quantité d'additif antistatique nécessaire devient trop importante, on utilise alors des films selon la deuxième forme de l'invention.

Selon la deuxième forme de l'invention, la couche intérieure (A) est en polyamide ou en alliage de polyamide et de polyoléfine. On peut utiliser les mêmes polyamides ou les mêmes alliages qu'on a cités pour la première forme de l'invention mais cette couche (A) ne contient pas d'additifs antistatiques. Quant à la couche (B) antistatique, elle peut être à base de polyoléfine (variante 1), de polyamide (variante 2) ou d'alliage de polyamide et de polyoléfine (variante 3). Ces produits peuvent être choisis parmi ceux décrits dans les composants de la couche (A).

Dans ces trois variantes, la couche (B) contient les additifs qu'on a décrit pour la première forme de l'invention et avec les mêmes proportions. Avantageusement, l'additif antistatique est un polymère à blocs polyamide et blocs polyéther.

Avantageusement, le film de la variante 1 comprend :

- 10 à 40 parties de polymères à blocs polyamide et bloc polyéther ;
- 5 à 20 parties d'un agent compatibilisant ;
- le complément à 100 d'au moins une polyoléfine.

La polyoléfine est avantageusement le polyéthylène, le polypropylène ou un copolymère de l'éthylène et d'une alphaoléfine. Si la couche (A) est en alliage de polyamide et de polyoléfine alors on préfère que la polyoléfine de la couche (B) soit la même que celle dans la couche (A).

Avantageusement, le film de la variante 2 comprend :

- 10 à 40 parties de polymère à blocs polyamide et blocs polyéther, de préférence les blocs polyamide étant en PA-6 ou PA-6,6 :

- le complément en polyamide, de préférence du PA-6 ou PA-6,6.

De préférence, le polyamide et le polyamide des blocs de l'additif sont du même type, c'est-à-dire PA-6 ou PA-6,6 pour les deux.

Si la couche (A) est en polyamide ou en alliage de polyamide et de polyoléfine, on préfère que le polyamide de la couche (B) soit du même type.

Avantageusement, le film de la troisième variante comprend :

- 10 à 40 parties de polymères à blocs polyamide et blocs polyéther ;
- le complément à 100 parties en alliage de polyamide et de polyoléfine ;
- le polyamide de l'alliage étant du même type que celui des blocs polyamides du polymère à blocs polyamides et blocs polyéther.

Si la couche (A) est en polyamide ou en alliage de polyamide et de polyoléfine, on préfère que le polyamide de l'alliage de la couche (B) soit du même type que le polyamide de la couche (A) ou du même type que le polyamide de l'alliage de polyamide et de polyoléfine de la couche (A).

Selon une autre forme avantageuse le film de la 3ème variante est un mélange des produits a, b, c, d tel que décrit dans la 1 ère forme de l'invention.

L'épaisseur de la couche (A) peut être comprise entre 50 et 500 µm, l'épaisseur de chaque couche (B) peut être comprise entre 10 et 50 µm. Un liant de coextrusion peut être disposé entre les couches (A) et (B) ou bien la couche (A) ou les couches (B) peuvent contenir des produits améliorants l'adhérence des couches (A) et (B).

Avantageusement, le produit améliorant l'adhérence est ajouté dans la couche (B) puisqu'elle est plus mince que la couche (A), ce qui permet d'en mettre moins. Ce produit qu'on ajoute dans la couche (A) ou la couche (B) est le liant de coextrusion précité.

A titre d'exemple de liant, on peut citer :

- le polyéthylène, le polypropylène, les copolymères de l'éthylène et d'au moins une alpha oléfine, des mélanges de ces polymères, tous ces polymères étant greffés par des anhydrides d'acides carboxyliques insaturés tels que par exemple, l'anhydride maléique. On peut aussi utiliser des mélanges de ces polymères greffés et de ces polymères non greffés.

- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les epoxydes insaturés ; ces copolymères pouvant être greffés par des anhydrides d'acides dicarboxyliques insaturés tels que l'anhydride maléique ou des epoxydes insaturés tels que le méthacrylate de glycidyle,

Si les couche (A) et (B) sont de même type alors il n'est pas nécessaire de disposer un liant de coextrusion ou même de l'ajouter dans les couches (A) ou (B). Il en est ainsi par exemple quand (A) et (B) sont en alliage de polyamide et de polyoléfine, (B) est constitué du même alliage que (A) mais dans lequel il y a un additif antistatique.

L'avantage des polymères à blocs polyamides et blocs polyéther comme additifs antistatiques est non seulement qu'ils ne migrent pas avec le temps, on conserve donc l'effet antistatique mais il n'y a pas de délamination entre (A) et (B). En effet, des additifs qui migrent provoquent généralement un défaut d'adhérence entre (A) et (B).

Une réalisation particulièrement intéressante de la deuxième forme de l'invention est telle que :

(A) est alliage de polyamide et de polycléfine ;
(B) est un mélange de 10 à 40 parties d'un polymère à blocs polyamides et blocs polyéther et du complément à 100 parties du même alliage que (A).

Le polyamide de l'alliage étant de préférence le même que celui des blocs polyamide du polymère à blocs polyamide et blocs polyéther.

De préférence, (B) comprend :

a un polyamide
b un polymère à blocs polyamides et blocs polyéther
c éventuellement une polyoléfine non fonctionnalisée
d une polyoléfine fonctionnalisée.

et (A) comprend les mêmes produits que (B) sauf (b).

Les proportions pondérales de a, b, c et d dans (B) sont celles déjà citées pour la 1 ère forme de l'invention.

Par exemple, a est le PA-6, b est un polymère à blocs PA-6 et blocs PEG, c est un copolymère de l'éthylène et d'une alphaoléfine et d est un copolymère éthylène / (méth)acrylate d'alkyle / anhydride maléique.

Une autre réalisation particulièrement intéressante de la deuxième forme de l'invention est telle que :

(A) est un alliage de polyamide et de polyoléfine ;
(B) est un mélange de :

- 10 à 40 parties d'un polymère à blocs polyamide et blocs polyéther ;
- 5 à 20 parties d'un agent compatibilisant ;
- le complément à 100 en moins une polyoléfine.

De préférence, (A) comprend :

- 55 à 70 parties de PA-6 :
- 5 à 15 parties d'un copolymère éthylène / (méth)acrylate d'alkyle /anhydride maléique.
- le complément à 100 parties du même polyéthylène utilisé dans (A).

Selon une troisième forme, le film de l'invention comprend au moins une couche intérieure en polyoléfine et de chaque côté une couche extérieure (B1) antistatique en polyamide ou en alliage de polyamide et de polyoléfine dans laquelle est dispersé un agent pour la rendre antistatique.

La polyoléfine de la couche intérieure peut être choisie parmi les polyoféfines déjà citées plus haut. Avantageusement, on utilise le polyéthylène, le polypropylène ou les copolymères éthylène / alphaoléfine. Les couches extérieures (B1) peuvent être choisies parmi la variante 2 et la variante 3 du film (B) de la deuxième forme de l'invention.

De préférence, (B1) est la variante 3. L'épaisseur de la couche intérieure peut être comprise entre 50 et 500 μm, l'épaisseur de chaque couche (B1) peut être comprise entre 10 et 50 μm. De même que pour la deuxième forme de l'invention, un liant de coextrusion peut être disposé entre la couche intérieure et les couches (B1) ou bien la couche intérieure ou les couches (B1) peuvent contenir des produits améliorant J'adhérence des couches. Ces produits sont les mêmes que ceux décrits dans la deuxième forme de l'invention.

Les différentes couches des films de l'invention peuvent contenir les additifs usuels tels que anti U.V., antioxydants, agents glissants.

Les films de l'invention sont fabriqués par les techniques habituelles de thermoplastiques. Les constituants des différentes couches sont mélangés dans des malaxeurs, des extrudeuses puis les mélanges résultants, c'est-à-dire les mélanges ayant respectivement la composition des couches A, B, B1, le liant sont introduits dans un dispositif de production de film mono ou multicouches tel que....

### *Exemples*

On a fabriqué un film (F1) constitué de :

100 parties d'un alliage de PA-6 et de polyoléfine comprenant :

- 65 parties de PA-6
- 27 parties de PEBD de Melt index 1 (190° C)
- 8 parties d'un copolymère éthyléne-acrylate de butyl-anhydride maléique à 5.5 % d'acrylate et 3,6 % d'anhydride.

On a fabriqué un film F2 constitué de :

- 94 parties de l'alliage utilisé pour réaliser F1
- 6 parties d'un polymère à blocs PA-6 de masse $\overline{Mn}$ 1500

  et blocs PEG de masse $\overline{Mn}$ 1500
  et ayant une durée shore D 40.

On a fabriqué un film F3 constitué de :

- 88 parties de l'alliage de F1
- 12 parties du polymère à blocs polyamide 6 et blocs PEG utilisé pour F2.

Ces films ont une épaisseur de 50 $\mu$m. Ils illustrent différentes couches A, B ou B1 de l'invention.
On a mesuré sur ces films la résistivité superficielle selon la norme UTE 26215/ASTM D 257, le temps de 1/2 de charge et le temps de 90 % de décharge.
On considère que les films de l'invention sont antistatiques quand le temps de 1/2 de charge est inférieure à 3 secondes.
Le temps de 1/2 de décharge se mesure comme suit :

on met un échantillon sur un plateau tournant relié à la terre. Une électrode est disposée sans contact au-dessus de l'échantillon, elle est portée à 10 KVolts. Ceci entraîne une ionisation de l'air et un dépôt de charges sur l'échantillon jusqu'à saturation.

Diamétralement opposée une autre électrode mesure le potentiel de surface. Quand le potentiel de surface atteint un palier, ceci signifie qu'il s'écoule autant de charges qu'on en dépose. On arrête la charge puis on mesure le temps au bout duquel le potentiel de surface a baissé jusqu'à la moitié du palier. Ce temps est appelé temps de demi décharge.
Par analogie on mesure le temps de 90 % de décharge.
Les résultats sont reportés sur le tableau 1 suivant.

| Film | Résistivité superficielle en $\Omega$ | Temps de 1/2 décharge | Temps de 90 % de décharge |
|------|-----------------------|-----------------------|---------------------------|
| F1 | > $10^{16}$ | 35 à 60 s | > 60 s |
| F2 | 9.8 $10^{11}$ | 1,8 à 2 s | 15 à 17 s |
| F3 | 3,2 $10^{11}$ | 0,8 à 1 s | 5 à 7 s |

**Revendications**

**1.** Film d'emballage comprenant:

- au moins une couche intérieure en polyoléfine, en polyamide ou en alliage de polyamide et de polyoléfine et,
- de chaque côté une couche extérieure antistatique en polyoléfine, en polyamide ou en alliage de polyamide et de polyoléfine avec la condition que si la couche intérieure est en polyoléfine alors les couches extérieures sont en polyamide ou en alliage de polyamide et de polyoléfine,
- dans lequel un additif antistatique est dispersé dans les couches extérieures.

2. Film selon la revendication 1 dans lequel l'additif antistatique est un polymère à blocs polyamide et blocs polyéther.

3. Film selon la revendication 2 dans lequel la quantité de polymère à bloc polyamide et blocs polyéther est de 10 à 40 parties pour respectivement 90 à 60 parties du polymère de la couche antistatique.

4. Film selon la revendication 1 dans lequel les couches extérieures comprennent :

- 10 à 40 parties de polymère à blocs polyamide et blocs polyéther,
- 5 à 20 parties d'un agent compatibilisant,
- le complément à 100 d'au moins une polyoléfine.

5. Film selon la revendication 2 ou 3 dans lequel les couches antistatiques extérieures sont en polyamide 6 ou en polyamide 6,6 et les blocs polyamide de l'additif antistatique sont dans le même polyamide.

6. Film selon l'une quelconque des revendications 1 à 3 dans lequel la couche intérieure est en polyamide ou en alliage de polyamide et de polyoléfine et est tel que ce polyamide est du même type que le polyamide des couches extérieures en polyamide ou en alliage de polyamide et de polyoléfine.

7. Film selon la revendication 3 dans lequel les couches antistatiques extérieures sont en alliage de polyamide et de polyoléfine et les blocs polyamide de l'additif antistatique sont dans le même polyamide c'est à dire en polyamide 6 ou en polyamide 6,6.

8. Film selon la revendication 1 dans lequel la couche intérieure est est un alliage de polyamide et de polyoléfine et les couches extérieures sont un mélange de :

- 10 à 40 parties d'un polymère à blocs polyamide et blocs polyéther,
- 5 à 20 parties d'un agent compatibilisant,
- le complément à 100 en moins une polyoléfine.

9. Emballages comprenant les films de l'une quelconque des revendications précédentes.

10. Utilisation des films de l'une quelconque des revendications 1 à 8 comme emballage de matières qui diffusent des produits volatils.

11. Utilisation selon la revendication 10 dans laquelle les matières qui diffusent des produits volatils sont des billes ou des granulés de polystyrène expansible qui contiennent un agent d'expansion inflammable tel que le pentane.

**Patentansprüche**

1. Verpackungsfolie, umfassend:

mindestens eine Innenschicht aus Polyolefin, Polyamid oder einer Mischung von Polyamid und Polyolefin und auf jeder Seite eine antistatische Außenschicht aus Polyolefin, Polyamid oder einer Mischung von Polyamid und Polyolefin mit der Bedingung, dass, wenn die Innenschicht aus Polyolefin besteht, die Außenschichten aus Polyamid oder einer Mischung von Polyamid und Polyolefin bestehen,

wobei ein antistatisches Additiv in den Außenschichten dispergiert ist.

2. Folie nach Anspruch 1, wobei das antistatische Additiv ein Polymer von Polyamidblöcken und Polyetherblöcken ist.

3. Folie nach Anspruch 2, wobei die Menge des Polymers von Polyamidblöcken und Polyetherblöcken jeweils 10 bis 40 Teile pro 90 bis 60 Teile des Polymers der antistatischen Schicht beträgt.

4. Folie nach Anspruch 1, wobei die Außenschichten folgendes umfassen:

10 bis 40 Teile Polymer von Polyamidblöcken und Polyetherblöcken,
5 bis 20 Teile eines kompatibel machenden Mittels, Rest, bezogen auf 100, mindestens ein Polyolefin.

5. Folie nach Anspruch 2 oder 3, wobei die antistatischen Außenschichten aus Polyamid 6 oder Polyamid 6,6 bestehen und die Polyamidblöcke des antistatischen Additivs aus dem gleichen Polyamid bestehen.

6. Folie nach einem der Ansprüche 1 bis 3, wobei die Innenschicht aus Polyamid oder einer Mischung von Polyamid und Polyolefin besteht und derart ist, dass dieses Polyamid vom gleichen Typ ist wie das Polyamid der Außenschichten aus Polyamid oder einer Mischung von Polyamid und Polyolefin.

7. Folie nach Anspruch 3, wobei die antistatischen Außenschichten aus einer Mischung von Polyamid und Polyolefin bestehen und die Polyamidblöcke des antistatischen Additivs aus dem gleichen Polyamid bestehen, d.h. aus Polyamid 6 oder Polyamid 6,6.

8. Folie nach Anspruch 1, wobei die Innenschicht eine Mischung von Polyamid und Polyolefin ist und die Außenschichten ein Gemisch aus folgendem sind:

10 bis 40 Teilen eines Polymers von Polyamidblöcken und Polyetherblöcken,
5 bis 20 Teilen eines kompatibel machenden Mittels,
Rest, bezogen auf 100, mindestens einem Polyolefin.

9. Verpackungen, welche die Folien nach einem der vorstehenden Ansprüche umfassen.

10. Verwendung von Folien nach einem der Ansprüche 1 bis 8 als Verpackung von Materialien, die flüchtige Produkte abgeben.

11. Verwendung nach Anspruch 10, wobei die Materialien, die flüchtige Produkte abgeben, Kugeln oder Granulat aus expandiertem Polystyrol sind, die ein entflammbares Triebmittel wie Pentan enthalten.

**Claims**

1. Wrapping film comprising:

- at least one inner layer made of polyolefin, of polyamide or of an alloy of polyamide and of polyolefin, and
- on each side an antistatic outer layer made of polyolefin, of polyamide or of an alloy of polyamide and of polyolefin, with the proviso that if the inner layer is made of polyolefin then the outer layers are made of polyamide or of an alloy of polyamide and of polyoletin,
- in which an antistatic additive is dispersed in the outer layers.

2. Film according to Claim 1, in which the antistatic additive is a polymer containing polyamide blocks and polyether blocks.

3. Film according to Claim 2, in which the amount of polymer containing polyamide blocks and polyether blocks is from 10 to 40 parts per 90 to 60 parts respectively of the polymer of the antistatic layer.

4. Film according to Claim 1, in which the outer layers comprise:

- 10 to 40 parts of polymer containing polyamide blocks and polyether blocks;
- 5 to 20 parts of a compatibilizing agent;
- the remainder to 100 of at least one polyolefin.

5. Film according to Claim 2 or 3, in which the outer antistatic layers are made of polyamide 6 or of polyamide 6,6 and the polyamide blocks of the antistatic additive are in the same polyamide.

**6.** Film according to any one of Claims 1 to 3, in which the inner layer is made of polyamide or of an alloy of polyamide and of polyolefin and is such that this polyamide is of the same type as the polyamide of the outer layers made of polyamide or of an alloy of polyamide and polyolefin.

**7.** Film according to Claim 3, in which the outer antistatic layers are made of an alloy of polyamide and of polyolefin and the polyamide blocks of the antistatic additive are in the same polyamide, in other words made of polyamide 6 or of polyamide 6,6.

**8.** Film according to Claim 1, in which the inner layer is an alloy of polyamide and of polyolefin and the outer layers are a mixture of:

- 10 to 40 parts of a polymer containing polyamide blocks and polyether blocks;
- 5 to 20 parts of a compatibilizing agent;
- the remainder to 100 being at least one polyolefin.

**9.** Wrapping comprising the films of any one of the preceding claims.

**10.** Use of the films of any one of Claims 1 to 8 as wrapping for materials which diffuse volatile products.

**11.** Use according to Claim 10, in which the materials which diffuse volatile products are expandable polystyrene beads or granules which contain a flammable expansion agent such as pentane.